# DEMANDE DE BREVET EUROPEEN

(11) **EP 0 578 595 A1**
(43) Date de publication de la demande: **12.01.1994**
(21) Numéro de dépôt: 93450005.9
(22) Date de dépôt: 07.07.1993
(51) Int. Cl.: H05B 6/80

(54) **Dispositif portatif d'application de micro-ondes pour le traitement localisé de divers matériaux notamment des charpentes**

(30) Priorité: 07.07.1992 FR 9208654
(71) Demandeur: UNIVERSITE DE BORDEAUX I, F-33405 Talence Cedex (FR)
(72) Inventeur: Marzat, Claude, F-33400 Talence (FR); Radtke, Damien, F-81160 Saint Juery (FR); Tarrade, Jacques, F-40270 Larriviere (FR); Wozniak, Edmond, F-81290 Viviers Les Montagnes (FR)
(74) Mandataire: Thébault, Jean-Louis

(57) **Abrégé**

- L'objet de l'invention est un dispositif caractérisé en ce qu'il est constitué d'un générateur micro-ondes (2) et d'un applicateur micro-ondes (3) sous incidence de Brewster, comprenant un guide d'ondes à l'extrémité duquel est disposé un cache métallique de protection anti-fuites constitué de deux plaques (12,13) parallèles, reliées le long de l'un de leurs côtés par une plaque de liaison (14), l'écartement entre les deux plaques parallèles correspondant à l'épaisseur de la poutre de charpente à traiter et l'une (12) des deux plaques parallèles étant percée d'une ouverture (11) coïncidant avec l'orifice de sortie du guide d'ondes (3) et disposée sensiblement dans la partie centrale de la plaque (12) et avec son axe longitudinal perpendiculaire à ladite plaque de liaison (14), ladite plaque (12) formant avec l'axe (A) du guide d'ondes (3) un angle de l'ordre de 30°.
- Applications diverses, notamment désinsectisation de pièces de bois.

## Description

La présente invention a trait à un appareil portatif permettant l'application de micro-ondes localisée sur la surface de divers matériaux en vue d'un traitement, en particulier en profondeur, à diverses fins.

L'une des applications possibles d'un tel appareil est la désinsectisation de pièces de bois, en particulier de charpentes d'habitation ou autres et c'est ce type d'application qui sera décrit ci-après, mais il est évident que l'appareil selon l'invention est susceptible de bien d'autres applications à des traitements de diverses natures appliqués sur la surface de divers matériaux, pour des interventions locales, généralement dans la masse desdits matériaux, de manière efficace, pratique et sans danger pour l'opérateur et l'environnement.

Les dispositifs actuels de désinsectisation de charpentes d'habitations consistent à percer les poutres et à injecter un produit toxique qui tue les insectes, puis à badigeonner le bois avec le même produit.

Cette solution est lente puisqu'il faut par exemple quatre heures pour traiter une poutre de cinq mètres et dangereuse du fait de l'emploi de substances toxiques.

La présente invention a précisément pour but, dans cette application particulière, de proposer un moyen nouveau capable de tuer in situ les insectes et leurs larves, à la fois de manière plus rapide et moins nocive pour l'environnement que les techniques actuellement employées.

A cet effet, l'invention a pour objet un dispositif portatif d'application de micro-ondes pour le traitement localisé de divers matériaux, notamment des charpentes, caractérisé en ce qu'il est constitué d'un générateur micro-ondes et d'un applicateur micro-ondes sous incidence de Brewster, comprenant un guide d'ondes à l'extrémité duquel est disposé un cache métallique de protection anti-fuites constitué de deux plaques parallèles, reliées le long de l'un de leurs côtés par une plaque de liaison, l'écartement entre les deux plaques parallèles correspondant à l'épaisseur de la poutre de charpente à traiter et l'une des deux plaques parallèles étant percée d'une ouverture coïncidant avec l'orifice de sortie du guide d'ondes et disposée sensiblement dans la partie centrale de la plaque et avec son axe longitudinal perpendiculaire à ladite plaque de liaison, ladite plaque formant avec l'axe du guide d'ondes un angle de l'ordre de 30°.

Un tel appareil permet de détruire in situ dans une poutre de charpente de bois existante d'éventuelles larves d'insectes en appliquant l'appareil sur la surface de la poutre et en le déplaçant le long de ladite surface en sorte de couvrir et traiter de proche en proche la totalité de la poutre.

Afin d'agrandir la surface d'irradiation et de permettre de traiter des poutres sur toute leur hauteur accessible, le guide d'ondes est prolongé par un cornet dont la section va en s'accroissant au fur et à mesure qu'on s'éloigne, ladite plaque portant ladite ouverture étant disposée à l'extrémité du cornet dont la section de sortie correspond à ladite ouverture, celle-ci s'étendant d'un bord à l'autre de la plaque.

Avantageusement, au moins la partie du cache protecteur au voisinage de l'orifice de sortie du guide d'ondes, équipé ou non dudit cornet, est munie d'un mini-rupteur électrique, engendrant, lorsque ladite partie est en contact avec la surface à traiter, un signal autorisant l'émission de micro-ondes.

Un tel dispositif est capable, par élévation de la température à l'intérieur des larves d'insectes, de tuer celles-ci dans l'épaisseur du bois, sur une profondeur de plusieurs centimètres et rapidement, en sorte qu'en irradiant de proche en proche une poutre sur toute sa longueur, on peut traiter celle-ci efficacement, sans endommager le bois et sans risque et dans un temps substantiellement réduit par rapport au temps nécessaire avec la technique habituelle rappelée plus haut.

L'appareil de l'invention peut également s'appliquer à la réticulation de colles dans des poutres de charpentes.

D'autres caractéristiques et avantages ressortiront de la description qui va suivre d'un mode de réalisation d'un dispositif selon l'invention, description donnée à titre d'exemple uniquement et en regard des dessins annexés sur lesquels :
- Figure 1 est une vue schématique de principe d'un dispositif selon l'invention ;
- Figure 2 est une vue en perspective d'un applicateur micro-ondes selon l'invention destiné plus particulièrement au traitement de poutres de charpentes ;
- Figure 4 est un diagramme de répartition des températures dans une pièce de bois soumise à une irradiation par micro-ondes.

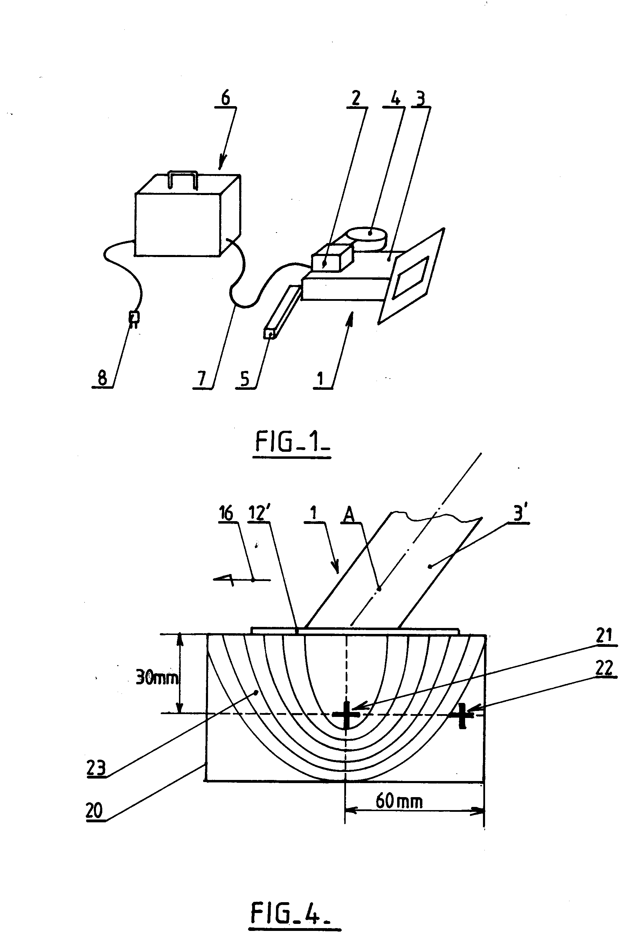

Sur la figure 1, on a représenté schématiquement un dispositif d'application de micro-ondes selon l'invention, destiné à la désinsectisation, comprenant, d'une part, un appareil portatif 1 constitué d'un générateur micro-ondes 2, d'un applicateur micro-ondes 3, d'un ventilateur 4, l'ensemble étant pourvu d'une poignée symbolisée en 5 pour la manipulation de l'appareil, et, d'autre part, d'un ensemble d'alimentation en énergie de l'appareil, disposé dans un coffret transportable 6, relié par un cordon électrique souple 7 audit appareil 1 et munie d'une prise de courant 8 pour le branchement à une source d'électricité.

Le générateur micro-ondes 2 est par exemple un magnétron générant un rayonnement électromagnétique hyper-fréquence de 2,45 GHz et d'une puissance variable de 0 à 1000 watts.

L'applicateur micro-ondes 3 est conçu pour appliquer le rayonnement hyper-fréquence sur la surface du bois à traiter, sous incidence de Brewster.

Le ventilateur 4 a pour objet de refroidir le magnétron (2).

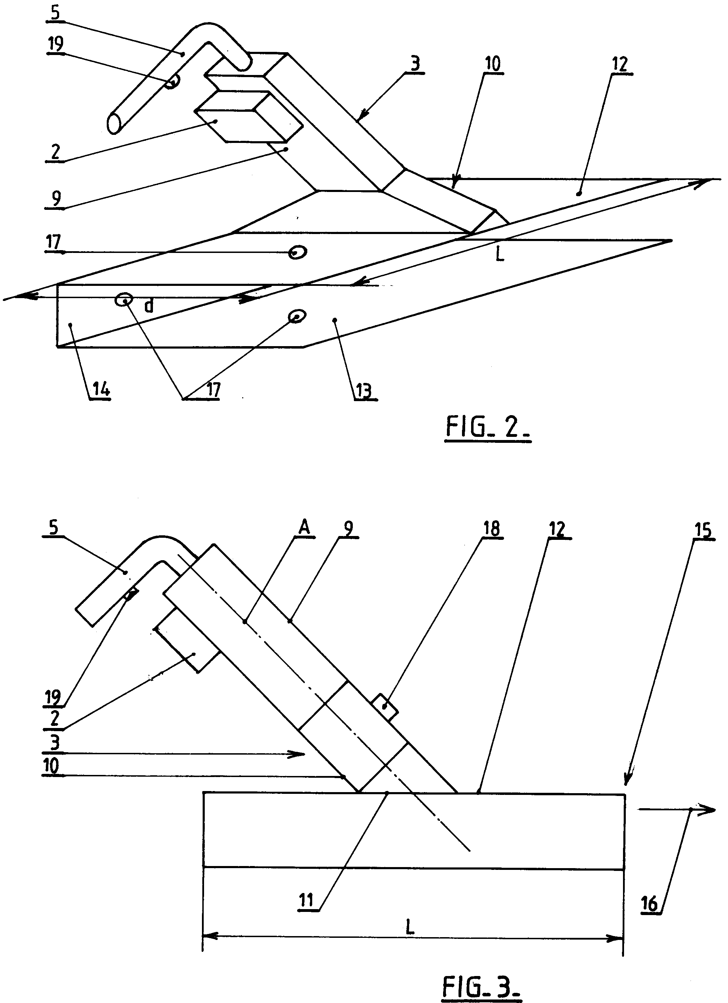

Les figures 2 et 3 illustrent un mode de réalisation du dispositif, représenté dans son principe à la figure 1, en vue de traiter des poutres de charpentes d'habitation de section rectangulaire, par exemple de 80 mm d'épaisseur et de 180 mm de hauteur et plus précisément de hauteur apparente, la poutre pouvant être partiellement encastrée longitudinalement.

Dans le mode de réalisation des figures 2 et 3, on a symbolisé en 2 le magnétron et en 3 l'applicateur micro-ondes, le ventilateur de refroidissement du magnétron n'étant pas représenté et en 5 la poignée de manipulation de l'appareil.

L'applicateur 3 est constitué d'un guide d'ondes classique 9 de section rectangulaire, par exemple 43 mm x 86 mm, prolongé par un cornet 10 de section également rectangulaire mais allant en s'élargissant au fur et à mesure que l'on s'éloigne du guide 9.

La section de l'extrémité distale du cornet 10, ou section de sortie de l'applicateur 3, coïncide avec une ouverture ou fenêtre 11 de forme rectangulaire et de mêmes dimensions, ménagée dans une plaque 12 métallique, en laiton ou acier inoxydable par exemple, plane, fixée à l'extrémité dudit cornet 10.

Le plan de la plaque 12 forme avec l'axe A de l'applicateur 3 un angle de l'ordre de 30° correspondant à l'angle de Brewster.

La fenêtre 11 présente un axe longitudinal perpendiculaire à l'axe A et s'étend d'un bord à l'autre de la plaque 12, la distance d entre les deux bords étant de l'ordre de 180 mm.

La plaque 12 comporte en vis à vis une plaque métallique 13 de mêmes forme et dimensions, disposée parallèlement et à une distance d'environ 80 mm et reliée à la plaque 12 par une plaque métallique de liaison 14 perpendiculaire aux deux autres plaques 12,13.

Les plaques rigides 12, 13, 14 forment ainsi une sorte de fourreau susceptible de chevaucher une poutre de section (totale ou apparente) 80 mm x 180 mm, en sorte que les trois plaques soient toutes en contact avec trois faces de la poutre, dont la quatrième n'est généralement pas accessible.

La fenêtre 11 est située sensiblement dans la partie centrale de la plaque 12 et la longueur L des plaques 12, 13 est de l'ordre de 300 mm, cette longueur étant liée à la puissance incidente disponible en sortie du cornet 10.

Le rôle des plaques 12, 13, 14 est, au droit de la zone d'application des micro-ondes sur la poutre sur laquelle est engagé à chevauchement l'ensemble applicateur 9 à 14, de servir d'écran protecteur anti-fuites protégeant du rayonnement hyper-fréquence le manipulateur de l'appareil.

Sur la figure 3, on a désigné en 15 l'avant de l'appareil qui se déplace le long de la poutre à traiter suivant la flèche 16.

Par mesure de sécurité, afin d'avoir un bon contact des plaques 12, 13, 14 vis à vis des faces respectives de la poutre en cours de traitement, on prévoit avantageusement sur la face interne de chacune desdites plaques, au moins un mini-rupteur électrique, par exemple à bille faisant légèrement saillie et susceptible d'être enfoncée par pression et d'engendrer un signal autorisant le fonctionnement du magnétron. On a représenté schématiquement en 17 sur la figure 2 de tels mini-rupteurs.

Si la poutre à traiter est accessible sur ses quatre faces, l'ensemble des plaques 12, 13, 14 pourra être complété par une quatrième plaque (non représentée) indépendante et rapportée pour envelopper complètement la poutre, les plaques étant bien entendu dimensionnées en conséquence.

De même, de préférence, l'applicateur 3 est muni d'un détecteur de fuite, symbolisé en 18 sur la figure 3, fixé par exemple sur le cornet 10 sur la face tournée vers l'avant 15 de l'appareil. Ce détecteur 18 est destiné à couper l'alimentation du magnétron 2 en cas de détection d'une fuite dépassant un certain seuil prédéterminé.

Avantageusement, l'opérateur portera sur lui un détecteur de fuite susceptible de couper l'alimentation du magnétron.

Les mini-rupteurs 17 sont montés en série en sorte que la non sollicitation d'un seul interdise la mise en route du magnétron 2, lequel est, par ailleurs, muni d'un capteur de température susceptible de couper l'alimentation du magnétron en cas d'échauffement trop important.

Toutes les connections électriques de fonctionnement et de sécurité entre l'appareil 1 et le coffret d'alimentation 6 transitent par le cordon 7.

L'appareil 1 est bien entendu muni d'un bouton symbolisé en 19 sur les figures 2 et 3 de commande du magnétron. Avantageusement, le bouton 19 commandera simplement le départ de l'émission micro-ondes, une temporisation permettant de commander l'arrêt, au bout d'un temps choisi et préfixé, de ladite émission.

Egalement de préférence, l'ensemble des plaques 12, 13, 14 est muni d'un dispositif de blocage en place sur la poutre à traiter. Un tel dispositif, non représenté, permet, par un verrouillage et un déverrouillage rapides, de fixer en position correcte momentanément l'appareil 1 sur la poutre, sans avoir à la tenir à bout de bras durant tout le temps d'application des micro-ondes, un tel traitement local devant être répété de proche en proche tout le long de la poutre.

En chaque endroit de mise en place de l'appareil, la poutre est traitée de préférence en une seule passe pendant laquelle le rayonnement hyper-fréquence est appliqué en continu pendant plusieurs dizaines de secondes par exemple.

La figure 4 illustre un appareil 1 selon l'invention en action sur une pièce de bois 20 de 60 mm d'épaisseur. Sur cette figure, on a symbolisé en 3' l'applicateur micro-ondes et en 12' la plaque protectrice entourant la section de sortie de l'applicateur, au contact avec la face supérieure de la pièce 20, sensiblement au milieu de celle-ci.

Des expériences ont montré que les larves d'insectes absorbent l'énergie rayonnée par l'applicateur 3' plus vite que ne le fait le bois, ce qui explique la rapidité du traitement. Ainsi, on a constaté que le rayonnement pouvait tuer des larves situées à 30 mm (en 21 sur la figure 4), à savoir à moitié de l'épaisseur de la pièce 20, en 35 secondes, avec une puissance de 800 watts, sans dégradation du bois, en particulier en surface. En 21 et 22, la température a été mesurée à 58 °C et 45 °C respectivement au bout de 30 secondes d'application des micro-ondes.

En appliquant les micro-ondes de chaque côté (faces supérieure et inférieure) de la pièce 20, on traite ainsi cette dernière dans toute son épaisseur.De plus, comme illustré par la figure 4, le gradient de température dans le bois, en particulier dans la zone 23 immédiatement en avant de l'appareil 1, par rapport à son sens de déplacement 16, révèle que, pendant l'application, mortelle pour les larves, dans la zone 21 en regard de l'orifice de sortie de l'applicateur 3', s'effectue en 22 un pré-chauffage des éventuelles larves s'y trouvant.

Par suite, lorsque l'appareil 1 sera déplacé pour être mis en position suivante avec l'orifice de sortie de l'applicateur 3' à l'aplomb de la zone 22, les larves pré-chauffées seront tuées plus sûrement et plus rapidement. Dès lors, la totalité de la poutre peut être, de proche en proche et sur ses deux faces opposées si l'épaisseur le nécessite, traitée dans un laps de temps qui finalement sera substantiellement inférieur à celui nécessité par la technique connue.

A titre d'exemple, alors que la technique connue permet une vitesse de traitement de 1,25 mètre de poutre par heure, le dispositif de l'invention permet une vitesse double de celle-ci.

La section d'application des micro-ondes, c'est-à-dire l'étendue de la fenêtre 11, peut être augmentée, mais à condition d'augmenter la durée d'application, pour une même puissance.

L'utilisation de l'appareil est sans danger du fait que les fuites micro-ondes provenant de l'applicateur sont réduites, par suite de l'émission sous angle de Brewster, et grâce aux diverses sécurités dont est muni l'appareil, à savoir notamment les plaques de protection 12, 13, 14, les mini-rupteurs 17, le détecteur de fuite 18.

L'invention n'est évidemment pas limitée au mode de réalisation représenté et décrit ci-dessus mais en couvre au contraire toutes les variantes notamment en ce qui concerne les formes, dimensions et agencements des plaques protectrices ou analogues 12, 13, 14 en fonction des formes et dimensions des pièces de bois à traiter. En particulier, lesdites plaques-écrans 12 à 14 pourraient être remplacées par un système de plaques de forme incurvée pour traiter des pièces à surfaces convexes ou concaves. Par ailleurs, en vue d'accroître les dimensions de l'ensemble 12 à 14, ce qui permettrait d'élargir la zone d'action de l'appareil, on peut réaliser les plaques 12 à 14 sous forme souple et non rigide, à l'aide par exemple d'une feuille métallique mince recouverte d'un matériau plus léger non métallique tel que textile ou matière plastique. L'ensemble peut devenir ainsi de dimensions plus importantes sans cesser d'être transportable et manipulable sans trop de fatigue. On gagne ainsi du temps sur le traitement de pièces de bois de grande longueur.

L'ensemble formé par le cornet 10 et les plaques 12, 13, 14 peut être monté amovible sur le guide d'ondes 9, en vue du traitement de poutres de configurations différentes nécessitant un agencement différent notamment desdites plaques 12 à 14.

Par ailleurs, l'invention s'applique à la destruction d'une manière générale de tout insecte, toute larve d'insecte ou tout organisme vivant pouvant se trouver dans l'épaisseur du bois de toutes pièces, y compris des arbres vivants.

L'appareil micro-ondes portatif de l'invention est susceptible de bien d'autres applications.

C'est ainsi qu'il peut être utilisé, en adaptant en conséquence l'applicateur et le cache métallique de protection agencés à l'extrémité du guide d'ondes, à la réparation localisée de structures en matières plastiques ou en matériaux composites, par application de l'appareil sur la surface de la partie concernée.

L'appareil peut être également utilisé pour le collage ponctuel (points de collage) de divers matériaux tels que bois, matières plastiques, matériaux composites et notamment pour la réalisation de poutres en lamellé-collé.

Dans toutes ces applications, l'applicateur et le cache de protection sont configurés de façon à permettre l'application des micro-ondes sous angle de Brewster sur la zone considérée et à s'appliquer contre la ou les surfaces environnantes de la zone traitée, ledit cache comportant une ou plusieurs parties, planes ou incurvées, en correspondance avec la nature de la ou des surfaces entourant la zone d'application.

Un même appareil est bien entendu capable de toutes ou de la plupart de ces diverses applications en prévoyant un montage amovible de l'applicateur et des caches sur l'extrémité d'un guide d'ondes standard.

Le générateur micro-ondes de l'appareil selon l'invention génère des ondes comprises entre 1 mm et 1 m de longueur et peut utiliser toutes les fréquences industrielles et médicales disponibles.

Enfin, d'une manière générale les micro-ondes sont appliquées en continu ou en discontinu.

## Revendications

1. Dispositif portatif d'application de micro-ondes pour le traitement localisé de divers matériaux, notamment des charpentes, caractérisé en ce qu'il est constitué d'un générateur micro-ondes (2) et d'un applicateur micro-ondes (3) sous incidence de Brewster, comprenant un guide d'ondes à l'extrémité duquel est disposé un cache métallique de protection anti-fuites constitué de deux plaques (12,13) parallèles, reliées le long de l'un de leurs côtés par une plaque de liaison (14), l'écartement entre les deux plaques parallèles correspondant à l'épaisseur de la poutre de charpente à traiter et l'une (12) des deux plaques parallèles étant percée d'une ouverture (11) coïncidant avec l'orifice de sortie du guide d'ondes (3) et disposée sensiblement dans la partie centrale de la plaque (12) et avec son axe longitudinal perpendiculaire à ladite plaque de liaison (14), ladite plaque (12) formant avec l'axe (A) du guide d'ondes (3) un angle de l'ordre de 30°.

2. Dispositif suivant la revendication 1, caractérisé en ce que ladite plaque (12) portant ladite ouverture (11) est disposée à l'extrémité d'un cornet (10), dont la section de sortie correspond à ladite ouverture (11), celle-ci s'étendant d'un bord à l'autre de la plaque (12).

3. Dispositif suivant la revendication 1 ou 2, caractérisé en ce que chaque plaque protectrice (12,13,14) est munie d'au moins un mini-rupteur (17) engendrant, lorsque ladite plaque est en contact avec la surface à traiter, un signal autorisant l'émission de micro-ondes.

4. Dispositif suivant l'une des revendications 1 à 3, caractérisé en ce que le générateur micro-ondes (2), auquel est associé un ventilateur (4) de refroidissement, l'applicateur micro-ondes (3) et ledit cache de protection (12,13,14) sont regroupés en un même appareil portatif (1) muni d'une poignée (5) et d'un bouton de commande (19) et relié par un cordon souple (7) à un coffret (6) d'alimentation en énergie électrique.

5. Dispositif suivant la revendication 4, caractérisé en ce que ledit appareil (1) est muni de moyens permettant une fixation à verrouillage et déverrouillage rapides dudit cache de protection (12,13,14) sur la pièce à traiter.

6. Dispositif suivant l'une des revendications 1 à 5, caractérisé en ce qu'il comporte, en outre, une temporisation permettant de pré-régler la durée d'application des micro-ondes.

7. Dispositif suivant l'une des revendications 1 à 6, caractérisé en ce que ledit cache de protection (12,13,14) et l'éventuel cornet (10) interposé entre le guide d'ondes (9) et ledit cache, sont montés amovibles sur ledit guide d'ondes.

8. Dispositif suivant l'une des revendications 1 à 7, caractérisé en ce que le cache de protection (12,13,14) est constitué de plaques métalliques rigides.

9. Dispositif suivant l'une des revendications 1 à 7, caractérisé en ce que le cache de protection (12,13,14) est constitué de feuilles métalliques minces recouvertes d'un matériau léger non métallique.
